# EUROPEAN PATENT APPLICATION

(11) **EP 4 752 412 A1**
(43) Date of publication of application: **03.06.2026**
(21) Application number: 24845258.3
(22) Date of filing: 18.06.2024
(51) Int. Cl.: F16K 11/087

(54) **ELECTRIC VALVE**

(30) Priority: 26.07.2023 JP 2023121710
(71) Applicant: Nippon Thermostat Co., Ltd., Kiyose-shi Tokyo 204-0003 (JP)
(72) Inventor: KUMASHIRO, Tsuyoshi, Kiyose-shi, Tokyo 204-0003 (JP)
(74) Representative: Hoffmann Eitle
(86) International application number: PCT/JP2024/022004
(87) International publication number: WO 2025/022876

(57) **Abstract**

Provided is an electric valve wherein a cooling liquid is prevented from rapidly flowing out to an outflow port when a valve body rotates and the cooling liquid outflow port and a valve hole communicate with each other, the micro flow rate of the cooling liquid is controlled, and clogging by foreign matter is minimized. The electric valve includes a housing 11 that has an opening at one end and a communication port 11b in a peripheral surface, a valve body 12 that is rotatably inserted into the housing and that opens and closes the communication port, a cylindrical seal member 14 that is attached to the communication port and that slides on the peripheral surface of the valve body, and a drive device that rotatably drives the valve body. The valve body has a cylindrical valve main body 12b, and formed in the valve body are an outer wall that can close off the communication port, a valve hole that can communicate with the communication port, and a valve opening that is formed at one end of the valve body and that communicates with the opening. In the cylindrical seal member, one end part of the seal member in which an opening is formed slides against the peripheral surface of the valve body, and a groove part 14c connected to the opening is formed in the one end part of the seal member.

## Description

### Technical Field

The present invention relates to an electric valve.

### Background Art

For example, in a rotary flow rate control valve used for a cooling device in an automobile, there is a case where a valve having an outer wall in a spherical shape or a cylindrical shape formed as a straight barrel is housed and disposed in a valve housing (valve housing) to be rotatably operated from the outside. The rotary flow rate control valve uses a spherical or cylindrical valve and is configured so that a desired motion can be obtained with respect to a passage provided to be connected to the valve housing by appropriately opening and closing the outflow port by the rotational motion of the valve.

That is, a valve hole is formed on the side surface of the valve, and the valve hole overlaps the position of the outflow port formed on the inner surface of the valve housing due to the valve rotational operation, thereby allowing the coolant to flow into the outflow port.

In the flow rate control valve, the communication state between the outflow port and the valve hole is changed by the rotation of the valve. If the communication state is suddenly changed due to the rotation of the valve, the flow rate of the coolant flowing through the outflow port suddenly changes, and pressure fluctuations and temperature variations on the outlet-port side tend to become larger.

To address this issue, PTL 1 discloses a structure that gradually increases the amount of coolant inflow from the valve hole side when communication begins between the outflow port and the valve hole.

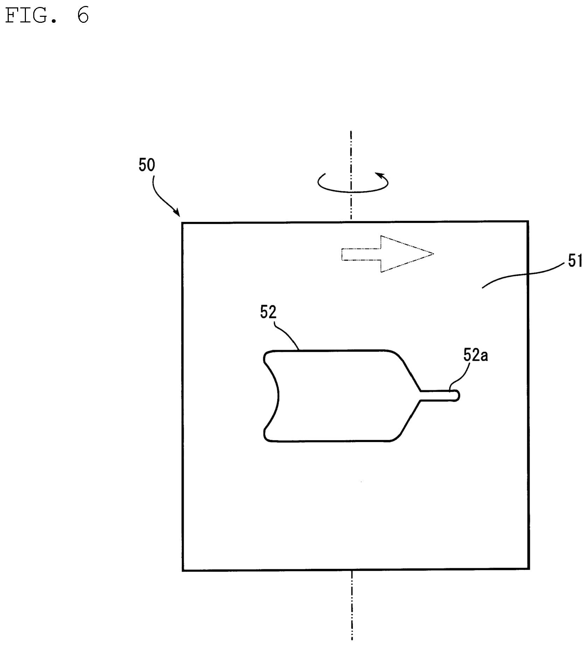

In the flow rate control valve disclosed in PTL 1, as shown schematically in FIG. 6, a slit 52a that penetrates the peripheral wall portion 51 is formed on the forward side edge, in the rotational direction of the valve body 50, among the edges of the valve hole 52 formed on the peripheral wall portion 51 of the cylindrical valve body 50. The slit 52a extends from the valve hole 52 in the rotation direction of the valve 50, and a coolant in an inner region of the valve 50 is guided to an outflow port through the slit 52a in a stage before the outflow port directly communicates with the valve hole 52.

### Citation List

### Patent Literature

[PTL 1] JP-A-2016-138452

### Summary of Invention

### Technical Problem

However, when the slit 52a penetrating the wall portion is formed in the edge portion of the valve hole 52 as disclosed in PTL 1, the width of the slit becomes narrower for a very small flow to flow. Accordingly, the slit may be clogged with a foreign matter.

The invention was achieved in view of the above-described problem and aims to provide an electric valve in which, when a valve rotates and an outflow port for a coolant and a valve hole communicate, a sudden outflow of the coolant to the outflow port can be prevented, a very small flow of the coolant can be controlled, and clogging with a foreign matter can be suppressed.

### Solution to Problems

In order to solve the above-described problem, an electric valve according to the invention includes a housing with an opening at one end and a communication port on the circumferential surface thereof,
a valve that is rotatably inserted into the housing and opens and closes the communication port, a seal member having a tubular shape attached to the communication port in slide contact with the outer circumference of the valve, and a driver for driving the valve to rotate, wherein the valve is provided with a valve portion with a tubular shape, an outer wall capable of blocking the communication port, a valve hole capable of communicating with the communication port, a valve opening formed at one end of the valve portion and communicating with the opening, and wherein the seal member having a tubular shape has a one end portion in which an opening is formed, being in slide contact with the circumferential surface of the valve body, and a groove portion connecting to the opening of the seal member is formed at the one end portion of the seal member.

According to this configuration, in the electric valve, the coolant starts to flow from the groove portion to the communication port (outflow port), by causing the groove to overlap with the valve hole first due to the rotation of the valve. Therefore, a sudden outflow of the coolant to the outflow port can be prevented, and a very small flow of the coolant can be controlled. Unlike the structure in the related art, in which a very small flow is caused to flow from the narrower slit, the clogging with foreign matter can be suppressed.

It is desirable that a region at least at a farther outward in a radial direction than the groove portion, at the one end portion of the seal member with the opening, is formed to be in slidable contact with the circumferential surface of the valve.

According to the configuration, the deterioration of the sealing function when the valve hole and the communication port do not overlap can be suppressed.

It is desirable that the seal member includes an engagement portion, formed on the outer circumferential surface of the seal member, that has a concave or convex shape that engages with a convex or concave portion formed at the communication port side.

As described above, with the engagement portion for rotation prevention provided on the outer circumferential surface of the seal member, the rotation of the seal member in the circumferential direction can be suppressed.

### Advantageous Effects of Invention

According to the electric valve of the invention, when a valve rotates, and an outflow port for a coolant and a valve hole communicate, a sudden outflow of the coolant to the outflow port can be prevented, a very small flow of the coolant can be controlled, and clogging with a foreign matter can be suppressed.

### Brief Description of Drawings

[FIG. 1]

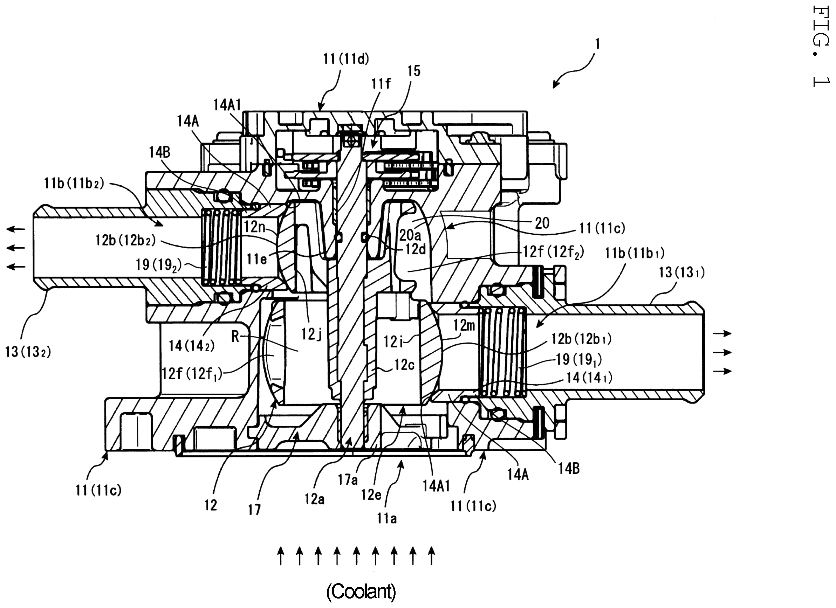

   FIG. 1 is a cross-sectional view showing an example configuration of the electric valve in the present embodiment.
[FIG. 2]

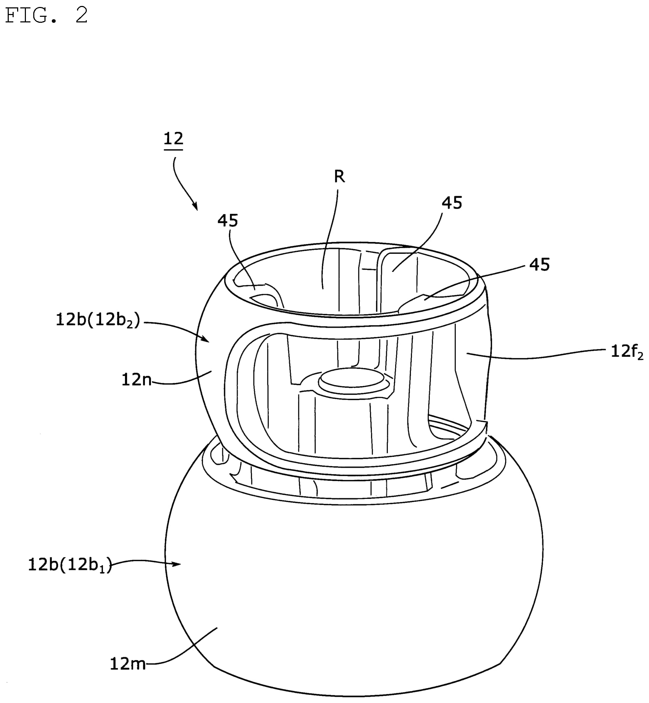

   FIG. 2 is a perspective view of a valve provided in the electric valve in FIG. 1.
[FIG. 3]

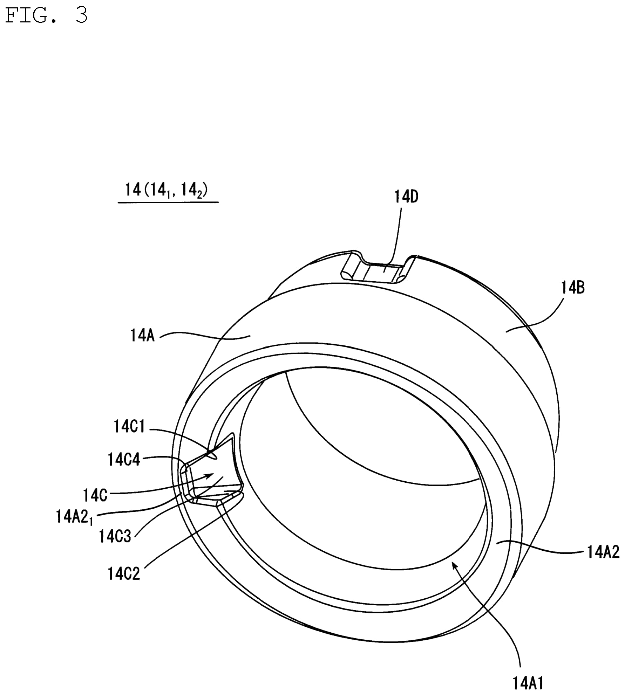

   FIG. 3 is a perspective view of a seal member of the embodiment.
[FIG. 4]

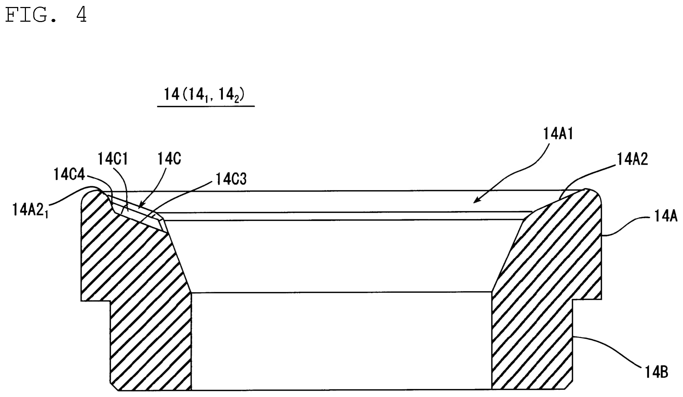

   FIG. 4 is a cross-sectional view of the seal member in FIG. 3.
[FIG. 5]

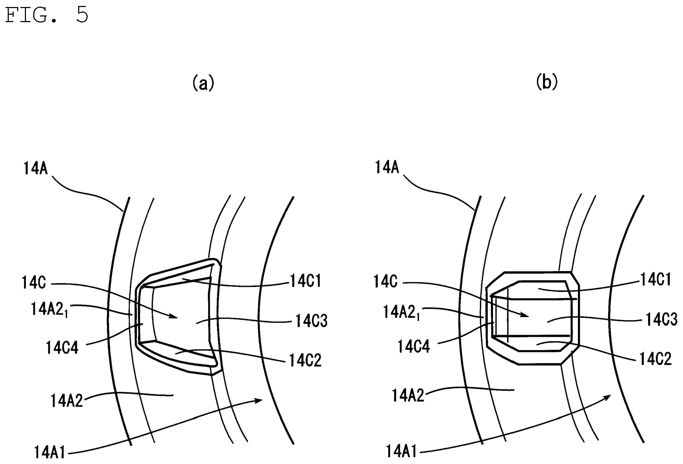

   FIG. 5(a) is a plan view of a groove portion of the seal member in FIG. 3, and FIG. 5(b) is a plan view showing an example of a modification of the groove portion.
[FIG. 6]
   FIG. 6 is a front view showing the shape of a valve hole in the related art.

### [Description of Embodiments]

Hereinafter, embodiments of an electric valve according to the invention will be described in detail with reference to the drawings. Note that the invention is not limited to these embodiments. Furthermore, in the specification and the drawings of the application, the elements that can be described in the same manner may have the same referential signs, and the overlapping description thereof may be omitted.

FIG. 1 is a sectional view showing a configuration example of an electric valve of one embodiment. In the present embodiment, for convenience of description, upward and downward directions in FIG. 1 are simply referred to as "upper" and "lower".

An electric valve 1 of the present embodiment is assumed to be used, for example, in a cooling circuit (a circulation system of a coolant) of an automobile including a cooling passage in which a coolant flowing out from an engine (cylinder head side) returns to the engine (cylinder block side) via a radiator, and a bypass passage in which the coolant flowing out from the engine returns to the engine not via (around) the radiator. In the electric valve 1, valve holes formed in the valve are controlled to open and close, thereby respectively distributing the coolant flowing in through the engine toward the cooling passage and the bypass passage and controlling the flow rates thereof.

### Basic Structure of Electric Valve

The electric valve 1 of the present embodiment includes a housing 11 in which an inflow port 11a and a plurality of outflow ports 11b (11b₁, 11b₂) for the coolant are formed, a valve 12 which is housed in the internal space of the housing 11 and rotatable about an axial line in the internal space, adaptors 13 (13₁, 13₂) which are connected to the outflow ports 11b, and seal members 14 (14₁, 14₂) for blocking the leakage of the coolant that passes through valve holes 12f (12f₁, 12f₂) formed in the valve 12 and is distributed toward the adaptors 13. In the electric valve 1, the rotation of the valve 12 is controlled according to an instruction from a controller (not shown) provided in a vehicle, thereby distributing the coolant appropriately toward the cooling passage and the bypass passage.

Hereinafter, the structure of the electric valve 1 of the present embodiment will be described more specifically. In the present embodiment, the direction along the axial line as the rotation center of the valve 12 is referred to as the "axial direction", the direction orthogonal to the axial line is referred to as the "radial direction", and the direction around the axial line is referred to as the "circumferential direction".

The housing 11 includes a body 11c having an internal space (a valve housing portion 20) for housing the valve 12, and a lid 11d having a bottomed shape forming a space for housing a reduction gear 15 between an upper surface of the body 11c and itself. The opening end portion (peripheral edge) of the lid 11d is attached to the upper surface of the body 11c to close the internal space of the lid 11d. Furthermore, the reduction gear 15 housed in the space of the lid 11d includes a plurality of gears and has a function of reducing and transmitting the rotation of a motor (driver: not shown) that operates in response to a command from the controller to the valve 12.

In the housing 11, a cylindrical insertion cylinder 11e rotatably supporting a shaft 12a that functions as the rotation shaft of the valve 12 in an inserted state is provided in an upper part of the body 11c. A journal 11f rotatably supporting the upper portion of the shaft 12a is provided on the inner circumference of the insertion cylinder 11e.

In the housing 11, the outflow ports 11b (11b₁, 11b₂) as communication ports having substantially cylindrical shapes are projected outward in the radial direction in the circumferential surface of the body 11c (an inner wall 20a of the valve housing portion 20). The outflow ports 11b₁, 11b₂ shown in FIG. 1 are respectively provided at different positions in the axial direction and the circumferential direction. Furthermore, the adaptors 13 (13₁, 13₂), having cylindrical shapes communicating with the above-described cooling passage and bypass passage, are respectively inserted into and fixed in the outflow ports 11b.

In FIG. 1 (cross-sectional view), the outflow ports 11b are provided in two parts of the body 11c; however, not limited to these positions. The outflow ports 11b may be further formed at other positions than those in FIG. 1 according to the number and directions of the flow passages for distributing the coolant.

Furthermore, the inflow port 11a, as an opening communicating with the cylinder head side for taking the coolant into the valve 12 side, is formed on the lower end of the housing 11. Moreover, a frame 17 is attached to the inflow port 11a. A cylindrical portion 17a formed in the center part of the frame 17 rotatably supports the lower end of the shaft 12a. The coolant can pass through the frame 17 and flow into the housing 11.

### Valve

The valve 12 has a shaft 12a that functions as the rotation shaft and a valve body 12b having an outer wall capable of changing the communication state with the outside and being integrally rotatably connected to the shaft 12a. The gears as component members of the reduction gear 15 are integrally attached to the shaft 12a. Thus, when the gears rotate due to the driving of the motor, the valve 12 (the shaft 12a, the valve body 12b) integrally axially rotates with the rotation.

Furthermore, in the valve 12, the valve body 12b is provided with a connecting part 12c (rotation shaft holder) that connects to the outer circumferential portion of the shaft 12a while the shaft 12a penetrates through at the center part. In the valve body 12b, two tubular valve portions, each having upper and lower openings and a spherical outer wall, are vertically connected. The valve openings communicate with the inflow port 11a (opening) of the housing 11. In the present embodiment, one valve portion formed in the lower part is a first valve portion 12b₁, and the other valve portion formed thereon is a second valve portion 12b₂.

More specifically, the valve 12 is formed of a resin substantially in a tubular shape and housed in the valve housing portion 20. The shaft 12a is located on the center axis of the valve 12. FIG. 2 is a perspective view of the valve 12. As described above, the valve body 12b of the valve 12 has the first valve portion 12b₁ that opens at upper and lower ends and the second valve portion 12b₂ that similarly opens at upper and lower ends and is formed to communicate in the axial direction from one end (the upper end in FIG. 1) of the first valve portion 12b₁. The valve 12 has a communication path R for the coolant formed by the first valve portion 12b₁ and the second valve portion 12b₂, and communicating with the inflow port 11a (opening), thereinside.

An outer wall 12m of the first valve portion 12b₁ and the connecting part 12c that connects to the outer circumferential portion of the shaft 12a are connected and supported by a plurality of (for example, three) bridges, not shown, to obtain a desired strength. The communication path R serves as a flow path for the coolant passing between the plurality of bridges in the first valve portion 12b₁.

Outer walls 12m, 12n (valve outer walls) of the first valve portion 12b₁ and the second valve portion 12b₂ are formed in spherical shapes having the largest diameters at the centers in the axial direction (so-called a ball valve) as shown in the drawing, and valve portion inner walls 12i, 12j forming the communication path R through which the coolant passes are formed in parallel to the axial direction.

Within the second valve portion 12b₂, for example, three reinforcing members 45 are evenly disposed in the circumferential direction and reinforce the valve 12. These reinforcing members 45 are configured not to interfere with the insertion cylinder 11e. The shaft 12a is guided by the insertion cylinder 11e and rotates integrally with the valve body 12b.

The part between the shaft 12a and the insertion cylinder 11e of the housing 11 is closed by a seal ring 12d. Accordingly, the coolant within the body 11c does not flow from the insertion cylinder 11e into the lid 11d. Furthermore, the lower end opening of the first valve portion 12b₁ functions as an introduction port 12e that takes the coolant flowing in from the cylinder head side via the frame 17 (inflow port 11a) into the internal space of the valve 12.

In the first valve portion 12b₁ and the second valve portion 12b₂, the valve hole 12f₁ and the valve hole 12f₂ are provided, respectively. The valve holes 12f penetrate the thick portions of the first valve portion 12b₁ and the second valve portion 12b₂ in the radial direction. When the valve 12 rotates and the valve hole 12f overlaps with the opening of the seal member 14, the coolant flows out from the overlapping portion. In this manner, when the valve body 12b rotates with the rotation of the shaft 12a, the respective valve holes 12f open and close and respectively change the communication states between the inflow port 11a and the outflow ports 11b (11b₁, 11b₂) by the opening and closing actions. That is, the respective valve holes 12f provided in the valve 12 are formed to change the communication states between the respective corresponding outflow ports 11b (11b₁, 11b₂) and the internal space of the valve 12 with the rotation. Accordingly, the coolant taken into the internal space of the valve 12 (first valve portion 12b₁, second valve portion 12b₂) via the introduction port 12e is distributed toward the cooling passage and the bypass passage according to the opening and closing actions of the respective valve holes 12f, and the amounts of outflow thereof are controlled.

The communication structure between the valve holes 12f₁, 12f₂ and the outflow ports 11b will be described more specifically. The seal members 14 (14₁, 14₂) intervene between the valve 12 and the cylindrical adaptors 13 (13₁, 13₂). FIG. 3 is a perspective view of the seal member 14 and FIG. 4 is a cross-sectional view of the seal member 14. As shown in the drawings, the seal member 14 is a tubular body formed of a larger-diameter portion 14A (first tubular portion) and a smaller-diameter portion 14B (second tubular portion) having different diameters from each other, and the smaller-diameter portion 14B is inserted into an end portion of the adaptor 13. As shown in FIG. 1, one end of coil springs 19 (191, 192) provided within the adaptor 13 is in contact with the end portions of the smaller-diameter portions 14B, and the seal members 14 are pressed against the outer walls 12m and 12n of the valve 12 by the urging forces of the coil springs 19.

As shown in FIG. 1, the larger-diameter portions 14A have openings 14A1 at one end, and the one end portions 14A2 of the larger-diameter portions 14A, in which the openings 14A1 are formed, are in slide contact with the circumferential surface (i.e., the outer walls 12m and 12n of the valve 12), to prevent the leakage of the coolant that is distributed to the adaptors 13 side. Furthermore, the circumferential surfaces (outer walls 12m, 12n) are provided with a plurality of valve holes 12f (12f₁, 12f₂) individually formed to correspond to the outflow ports 11b to overlap with the outflow ports 11b by axial rotation.

Here, when the one end portion 14A2 of the seal member 14 overlaps with the valve holes (12f₁, 12f₂) of the valve 12 by the rotation of the valve 12, if the communication state is suddenly changed, the flow rate of the coolant flowing through the outflow port 11b suddenly changes, and pressure fluctuations and temperature variations on the outflow port 11b side tend to be greater. Therefore, in the present embodiment, as shown in FIGS. 3 and 4, in the one end portion 14A2 of the larger-diameter portion 14A of the seal member 14, a groove portion 14C with a bottom connecting to the opening 14A1 is provided in the radial direction at the position first overlapping with the valve holes 12f₁, 12f₂ by the rotation of the valve 12.

Furthermore, a region 14A2₁ in the one end portion 14A2 of the seal member 14, at least at the outer side in the radial direction than the groove portion 14C, is formed to be in slidable contact with the outer walls 12m (12n) of the valve 12 so that the sealing function will not deteriorate even when the opening 14A1 does not overlap with the valve holes 12f₁, 12f₂.

The groove portion 14C may have a fan shape having groove side surfaces 14C1 and 14C2 which become wider toward the inside in the radial direction, as shown in FIG. 5(a) in plan view. Alternatively, it may have a shape having a constant distance, that is, lateral width, between the groove side surfaces 14C1, 14C2 in the radial direction, as shown in FIG. 5(b) in plan view. The groove bottom surface 14C3 may have a surface shape inclined at a predetermined angle relative to the radial direction or a surface shape perpendicular to the axial direction. Furthermore, the depth of the groove back surface 14C4 may be optionally set. The design of these groove shapes may be determined according to the required specifications, control method, etc.

As described above, the groove portion 14C is formed in the one end portion 14A2 of the seal member 14, which is in contact with the valve 12 in which the opening 14A1 is formed to slow down the flow of the coolant into the outflow port 11b at the start of communication, and thus sudden pressure fluctuations can be suppressed and the flow rate of the coolant supplied to the outflow port 11b can be changed with precision.

Furthermore, as described above, the groove portion 14C is provided at a position where it first overlaps the valve holes 12f1 and 12f2 due to the rotation of the valve 12 in the one end portion 14A2, in which the opening 14A1 of the larger-diameter portion 14A of the seal member 14 is formed. However, if the seal member 14 rotates relative to the adaptor 13, it is impossible to slow down the flow of the coolant into the outflow port 11b at the start of communication between the valve holes 12f₁ and 12f₂ and the inflow port 11a.

Thus, in the present embodiment, as shown in FIG. 3, an engagement groove 14D (engagement portion) for rotation prevention is provided on the outer circumferential surface of the smaller-diameter portion 14B. Meanwhile, a rib (convex portion), not shown, formed to engage with the engagement groove 14D is provided on the inner circumferential surface (the communication port side) of the adaptor 13, into which the smaller-diameter portion 14B is inserted.

Accordingly, the seal member 14 is movable in the axial direction (toward the valve 12) by the urging force of the coil spring 19, and the rotation in the circumferential direction thereof is suppressed.

In the configuration described above, for example, when the valve 12 rotates by driving of the shaft 12a (rotation shaft) and the valve hole 12f₁ (12f₂) of the first valve portion 12b₁ (second valve portion 12b₂) starts to communicate with the outflow port 11b₁ (outflow port 11b₂), the coolant flowing in from the engine side first starts to flow from the groove portion 14C formed at the opening 14A1 side of the seal member 14₁ (14₂) to the outflow port 11b₁ (outflow port 11b₂). That is, the flow of the coolant into the outflow port 11b at the start of communication becomes slower, and sudden pressure fluctuations are suppressed.

When the valve 12 further rotates, and the valve hole 12f₁ (12f₂) communicates with the outflow port 11b₁ (outflow port 11b₂), the coolant flowing in from the engine side is guided from the valve hole 12f₁ (12f₂) to the outflow port 11b₁ (outflow port 11b₂) at a desired flow rate.

As described above, according to the present embodiment, the groove portion 14C is provided at a position where it first overlaps the valve holes 12f₁ and 12f₂ due to the rotation of the valve 12 in the open one end portion 14A2, in which the opening 14A1 of the larger-diameter portion 14A of the seal member 14 is formed. Accordingly, the coolant starts to flow from the groove portion 14C to the outflow port 11b, and thus, a sudden outflow of the coolant to the outflow port 11b can be prevented, and a very small flow of the coolant can be controlled. Unlike the structure in the related art, in which a very small flow is caused to flow from the narrower slit, clogging with foreign matter can be suppressed.

Furthermore, when the seal member 14 rotates in the circumferential direction, an effect by the groove portion 14C formed in the larger-diameter portion 14A is not obtained, however, with the engagement groove 14D for rotation prevention provided on the outer circumferential surface of the smaller-diameter portion 14B, the rotation of the seal member 14 in the circumferential direction can be suppressed.

Moreover, according to the configuration described above, sudden pressure fluctuations and temperature variations can be suppressed, and the durability of the respective core components connected to the outflow ports 11b can be improved without an increase in the number of components.

Note that, in the present embodiment, the example in which one groove portion 14C is provided at the opening 14A1 side of the larger-diameter portion 14A of the seal member 14 is illustrated; however, the invention is not limited to this form. A plurality of the groove portions 14C may be provided along the circumferential direction of the one end portion 14A2 of the seal member 14 in which the opening 14A1 is formed.

Furthermore, in the present embodiment, the example in which one engagement groove 14D is provided on the outer circumferential surface of the smaller-diameter portion 14B of the seal member 14 is illustrated; however, the invention is not limited to this form. A plurality of the engagement grooves 14D may be provided along the circumferential direction of the smaller-diameter portion 14B.

Moreover, in the invention, the engagement groove 14D as the engagement portion may have a convex shape, such as a rib, instead of the groove shape (concave shape). In this case, a concave portion, such as a groove (not illustrated), may be provided on the inner circumferential surface of the adaptor 13 into which the smaller-diameter portion 14B is to be inserted so as to engage with the convex portion as the engagement portion formed in the smaller-diameter portion 14B.

In the present embodiment, the valve 12 in which the first valve portion 12b₁ and the second valve portion 12b₂ are coupled in the axial direction is described as an example. However, the valve according to the invention is not limited to that form. For example, the number of valve portions may be one, or three or more spherical valve portions may be coupled in the axial direction.

Furthermore, in the present embodiment, the valve having the outer wall in a spherical shape (the so-called ball valve) is described. However, the invention is not limited to that form. A tubular valve having an outer wall surface in a straight barrel shape may be adopted.

In the present embodiment, as an example, the electric valve 1 that distributes the coolant flowing in from the inflow port 11a (via the frame 17 side) toward the cooling passage and the bypass passage is described. However, the connection configuration of the flow passages communicating with the electric valve 1 is not limited to that. The connection configuration can be appropriately changed according to the specifications of the cooling circuit (the circulation system of the coolant) of the automobile: for example, for the flow path in which the coolant flows from the inflow port (upstream) formed in the circumferential surface of the body 11c of the housing 11 (inner wall 20a of the valve housing portion 20) to the outflow port (downstream) at the frame 17 side or the like.

Furthermore, in the present embodiment, the seal members 14 (14₁, 14₂) are pressed against the outer wall of the valve 12 by urging forces of the coil springs 19 (19₁, 19₂), as shown in FIG. 1, but not limited to this. As long as the seal members can block the leakage of the coolant passing through the outflow ports 11b and distributed toward the adaptor 13, the seal members may be implemented by other structures.

The preferred embodiments of the invention are described in detail above. Alterations, modifications, and changes can be made without departing from the scope of the claims.

### Reference Signs List

- 1: electric valve
- 11: housing
- 11a: inflow port (opening)
- 11b: outflow port (communication port)
- 12: valve
- 12a: shaft
- 12b₁: first valve portion (valve body)
- 12b₂: second valve portion (valve body)
- 12f₁: valve hole
- 12f₂: valve hole
- 12m: outer wall (valve outer wall)
- 12n: outer wall (valve outer wall)
- 14: seal member
- 14A: larger-diameter portion (first tubular portion)
- 14A1: opening
- 14A2: one end portion
- 14B: smaller-diameter portion (second tubular portion)
- 14C: groove portion
- 14D: engagement groove (engagement portion)
- 20: valve housing portion
- 20a: inner wall
- R: communication path

## Claims

1. An electric valve comprising:
a housing with an opening at one end and a communication port on a circumferential surface thereof;
a valve that is rotatably inserted into the housing and opens and closes the communication port;
a seal member having a tubular shape attached to the communication port in slide contact with the circumferential surface of the valve; and
a driver for driving the valve to rotate,
wherein
the valve has a tubular valve body,
the valve body is provided with an outer wall capable of blocking the communication port of the housing, a valve hole capable of communicating with the communication port, and a valve opening formed at a one end of the valve body and communicating with the opening of the housing, and
the seal member having a tubular shape has a one end portion in which an opening is formed, being in slide contact with the circumferential surface of the valve body, and
a groove portion connecting to the opening of the seal member is formed at the one end portion of the seal member.

2. The electric valve according to claim 1,
wherein
a region at least further outward in a radial direction than the groove portion, at the one end portion of the seal member with the opening, is formed to be in slidable contact with the circumferential surface of the valve.

3. The electric valve according to claim 1,
wherein the seal member comprises an engagement portion which is formed on the outer circumferential surface of the seal member and provided with a concave or convex shape that engages with a convex or concave portion formed at the communication port side.
